# EUROPEAN PATENT APPLICATION

(11) **EP 1 688 939 A2**
(43) Date of publication of application: **09.08.2006**
(21) Application number: 05257163.5
(22) Date of filing: 21.11.2005
(51) Int. Cl.: G11B 9/02, G11B 9/04, G11B 9/06

(54) **Electrical read head having high sensitivity and resolution power and method of operating the same**

(30) Priority: 02.02.2005 KR 2005009740
(71) Applicant: Samsung Electronics Co., Ltd., Suwon-si, Gyeonggi-Do (KR)
(72) Inventor: Kim, Yong-su 1-403 Woosung 6-cha Apt, Seoul (KR); Lee, Ju Electrical Engineering Department, Seongdong-gu, Seoul (KR); Choi, Jae-hak Electrical Engineering Department, Seongdong-gu, Seoul (KR)
(74) Representative: Greene, Simon Kenneth

(57) **Abstract**

An electrical read head having high sensitivity and resolution power and a method of operating the same are provided. The electrical read head includes a core portion (44) for recording/reading data on/from a recording medium and an electrode pad (60,62) connecting the core portion (44) to a power supply. A surface of the core portion (44) facing the recording medium is a plane surface and side surfaces of the core portion are perpendicular to the plane surface.

## Description

The present invention relates to a measuring apparatus and a method of operating the same, and more particularly, to an electrical read head having high sensitivity and resolution power and a method of operating the same.

A key point in recording and reading data by a read head (probe) method is to increase the sensitivity and resolution power of the read head. The read head must have high resolution power to sense the polarization of a small area in a recording medium in order to record data at high density. Moreover, since a small polarization variation occurs, the read head must have a great resistance variation and a voltage variation, i.e., high sensitivity.

Various types of read heads such as a field effect transistor (FET) probe type read head, a resistive probe type read head, and an EFM probe type read head are widely used.

These read heads are appropriate for measuring physical quantities, such as a concentration of impurities doped in a predetermined region of a wafer. However, these read heads do not have a sensitivity and resolution power high enough to record data at high density and read high-density data.

According to an aspect of the present invention, there is provided an electrical read head including a core portion for recording and/or reading data on/from a recording medium and an electrode pad connecting the core portion to a power supply, wherein a surface of a core portion facing the recording medium is a plane surface and side surfaces of the core portion are perpendicular to the plane surface.

The electrical read head may further include an insulating layer covering both side surfaces of the core portion and the electrode pad; and a shield layer covering a side surface of the insulating layer.

The core portion may include a nonconductive region and a conductive region.

The core portion may be a pure semiconductor layer. The conductive region may be a region doped with conductive impurities.

According to another aspect of the present invention, there is provided a method of operating a read head including a core portion, an electrode pad connecting the core portion to a power supply, an insulating layer covering both side surfaces of the core portion and the electrode pad, and a shield layer covering a side surface of the insulating layer, the method including: grounding the shield layer when reading data from a recording medium having a conductive layer attached to a bottom thereof using the read head.

The conductive layer may also be grounded.

A surface of the core portion facing the recording medium may be a plane surface and side surfaces of the core portion may be perpendicular to the plane surface. The core portion may include a nonconductive region and a conductive region.

Accordingly, the present invention can increase the track density of the recording medium, that is, Track-Per-Inch (TPI), and signal-to-noise ratio.

The present invention thus provides an electrical read head having an increased sensitivity that can increase a signal-to-noise ratio and resolution power.

The present invention also provides a method of operating an electrical read head to record and read data.

The above and other features and advantages of the present invention will become more apparent by describing in detail exemplary embodiments thereof with reference to the attached drawings in which:
FIG. 1 is a sectional view illustrating a read head and a recording medium used for implementing an electrical read head according to the present invention;
FIG. 2 is a three-dimensional graph illustrating a variation of a read voltage according to a polarization angle θp and a probe angle θr of the read head in FIG. 1;
FIG. 3 is a graph illustrating a variation of an equipotential line for a read voltage according to a polarization angle θp and a read head angle θr of a read head in FIG. 1;
FIG. 4 is a plane view of the electrical read head to which a result of measurement for the read head in FIG. 1 is applied according to the present invention;
FIG. 5 is a sectional view illustrating an electrical read head and a recording medium to which a result of measurement for the read head shown in FIG. 1 is applied according to an embodiment of the present invention;
FIG. 6 is a plane view of the electrical read head to which a result of measurement for the read head in FIG. 1 is applied according to another embodiment of the present invention;
FIG. 7 is a front view illustrating a core portion separated from the electrical read head shown in FIG. 6 and a position of an electrode pad in the core portion;
FIG. 8 is a sectional view for explaining a method of operating an electrical read head in a data read operation according to a first embodiment of the present invention;
FIG. 9 is a three-dimensional graph illustrating a variation of a read voltage according to a shield width Xs and a distance Xd between a shield layer and a core portion when the shield layer is grounded in a data read operation;
FIG. 10 is a three-dimensional graph illustrating a variation of a read voltage according to a shield width Xs and a core width Xp when the shield layer is grounded in a data read operation;
FIG. 11 is a graph illustrating of a variation of an equipotential line for a read voltage according to a shield width Xs and a distance Xd between a shield layer and a core portion;
FIG. 12 is a graph illustrating a variation of an equipotential line for a read voltage according to a shield width Xs and a core width Xp;
FIG. 13 is a three-dimensional graph illustrating a contour read voltage variation according to a core width Xp and a distance Xd between a shield layer and a core portion when the electrical read head is used as shown in FIG. 8;
FIG. 14 is a graph illustrating a variation of an equipotential line for a read voltage according to a result in FIG. 13;
FIG. 15 is a sectional view illustrating a method of operating an electrical read head in a data read operation according to a second embodiment of the present invention;
FIGS. 16 through 21 are graphs illustrating a read voltage variation and a variation of an equipotential line for a read voltage according to a shield width Xs and at least one of a distance Xd between a shield layer and a core portion and a core width Xp when the electrical read head is used as shown in FIG. 15; and
FIGS. 22 through 24 are graphs illustrating an output of a read voltage when a recording medium moves about 100 nm under conditions that a shield width Xs is 50 nm, a distance Xd between a shield layer and a core portion is 10 nm, and a core width Xp is 50nm.

Hereinafter, referred embodiments of the present invention will be described in detail with reference to the attached drawings. In the drawings, the thicknesses of layers and regions are exaggerated for clarity.

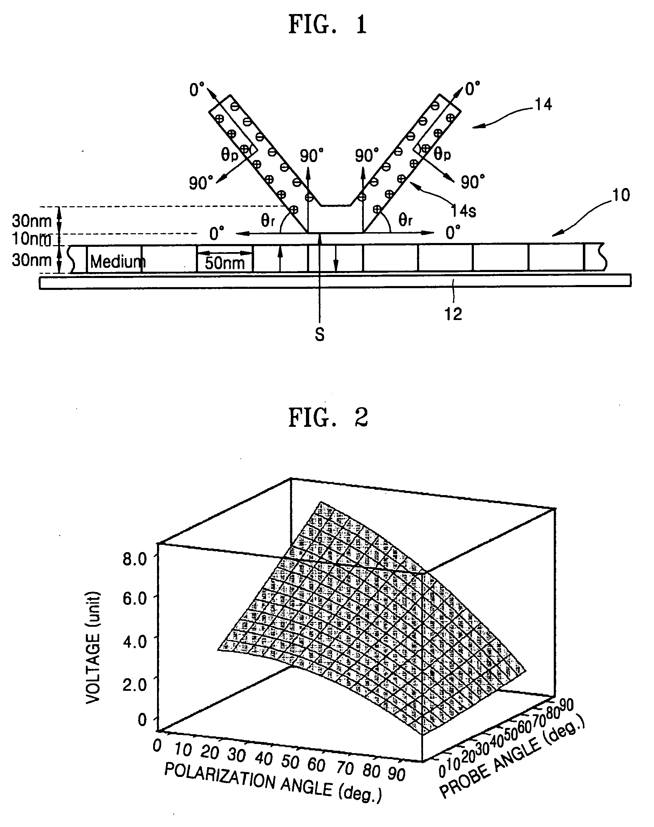

FIG. 1 is a sectional view of a resistive probe type read head. Reference numerals 10, 12, and 14 represent a recording medium, a conductive layer disposed under the recording medium, and a read head, respectively. The read head 14 shown has the same shape like a conventional resistive read head. The read head 14 has a tip having a surface S that faces the recording medium 10. A distance between the recording medium 10 and the read head 14 is a distance between the recording medium 10 and the surface S. A vertical arrow in the recording medium 10 represents a direction of a residual polarization in a corresponding domain. A reference symbol ⊖p represents a polarization angle between a slant surface 14s of the read head 14 and a polarization direction of the read head 14. Also, a reference symbol ⊖r represents a read head angle between the surface S of the read head 14 and the slant side 14s. The polarization angle ⊖p and the read head angle θr are very important variables in designing the read head of the present invention.

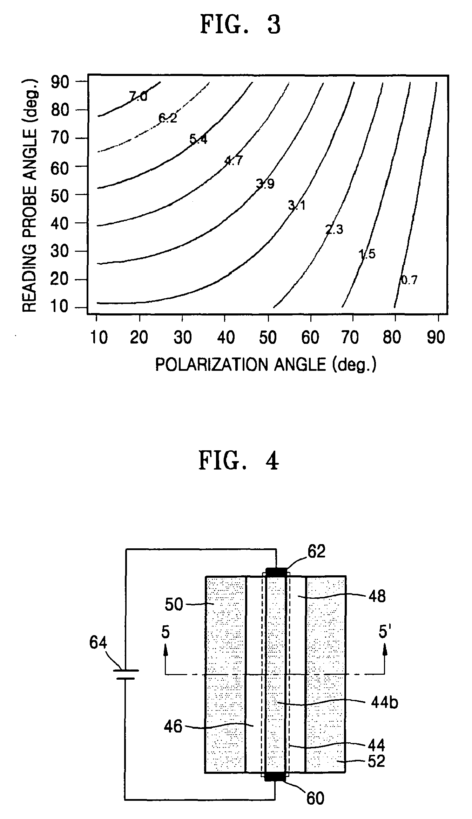

FIGS. 2 and 3 illustrate a variation of a read voltage in the read head 14 according to the polarization angle θp and the read head angle ⊖r. The read voltage is an electric potential difference generated in the read head 14 according to polarization states of the recording medium 10.

FIG. 2 is a three-dimensional graph illustrating a variation of a read voltage in the read head 14 shown in FIG. 1, and FIG. 3 is a graph of an isoelectic line for a read voltage illustrating a variation of a read voltage in the read head 14 shown in FIG. 1.

Referring to FIGS. 2 and 3, the read voltage is larger, when the polarization angle θp is smaller and the read head angle θr is larger. This means that the electrical read head having the smallest polarization angle θp and the largest read head angle θr produces the highest read voltage.

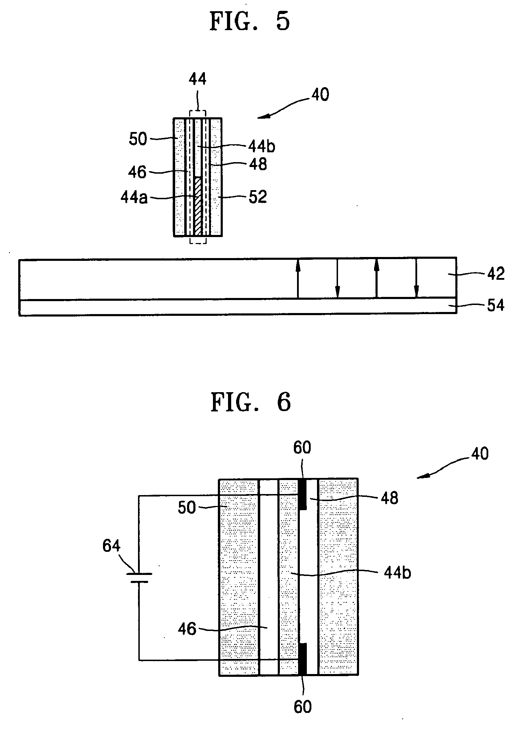

FIG. 4 is a plane view of the electrical read head 40 according to the present invention. Referring to FIG. 4, first and second electrode pads 60 and 62 are disposed at both ends of a core portion 44, respectively. The first and second electrode pads 60 and 62 are connected to a power supply 64. Referring to FIG. 6, the first and second electrode pads 60 and 62 may be disposed between the core portion 44 and the second insulating layer 48. In addition, positions of the first and second electrode pads 60 and 62 may have other positions.

FIG. 5 is a sectional view taken along line 5-5' of FIG. 4. In FIG. 5, the size of the electrical read head 40 is exaggerated for clarity.

Referring to the FIG. 5, the electrical read head 40 includes a core portion 44 for recording/reading data on/from a recording medium 42, first and second insulating layers 46 and 48 covering both sides of the core portion 44, a first shield layer 50 covering side surfaces of the first insulating layer 46, and a second shield layer 52 covering side surfaces of the second insulating layer 48. A reference numeral 54 represents a conductive layer attached to a bottom of the recording medium 42. The first and second insulating layers 46 and 48 may be formed with a silicon oxide layer, and the first and second shield layers 50 and 52 may be formed with a conductive layer. The core portion 44 is formed with a semiconductor layer and includes an electrically nonconductive region 44b and an electrically conductive region 44a. The conductive region 44a is a region doped with conductive impurities in a pure semiconductor layer. Also, the conductive region 44a faces the recording medium 42 and its resistance changes according to the polarization states of the recording medium 42. The nonconductive region 44b is a region of the pure semiconductor layer in which the conductive impurities are not doped.

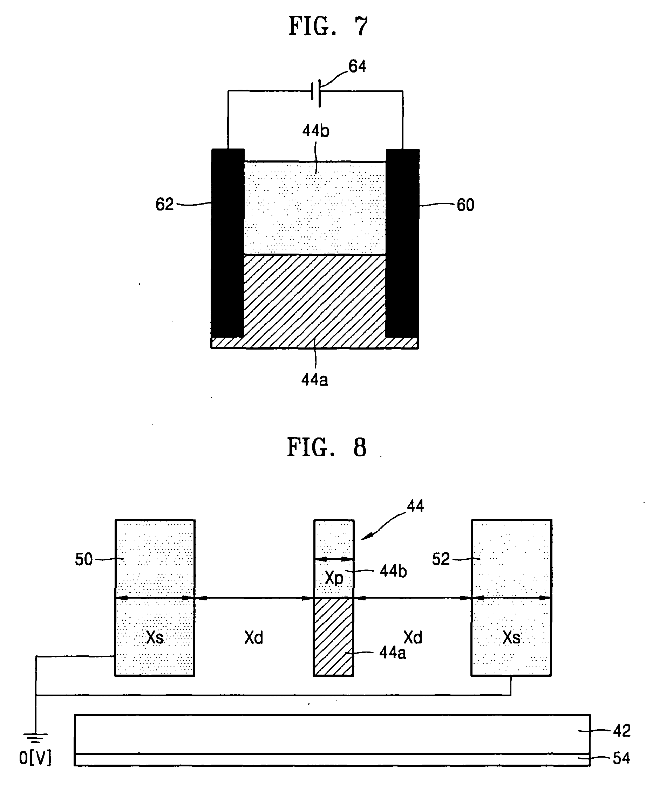

FIG. 7 illustrates the core portion 44 separated from the electrical read head 40 shown in FIG. 6. Referring to FIGS. 6 and 7, the first and second electrode pads 60 and 62 are disposed along the conductive region 44a and the nonconductive region 44b. The power supply 64 is applied to the both ends of the conductive region 44a through the first and second electrode pads 60 and 62.

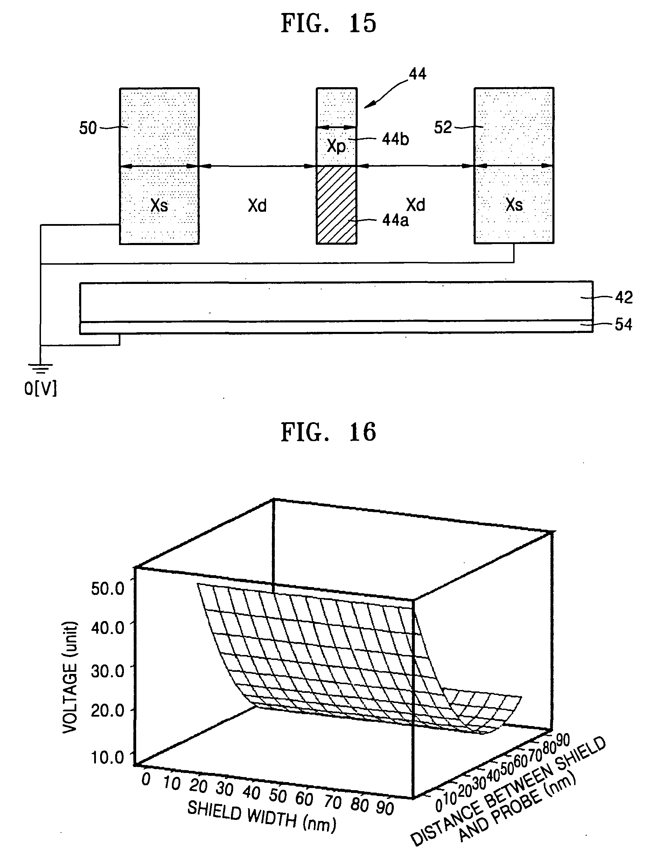

In order to enhance the sensitivity in reading data from the recording medium 42 using the electrical read head 40, the first and second shield layers 50 and 52 of the electrical read head 40 are grounded as shown in FIG. 8 (hereinafter, referred to as a first embodiment), or grounded together with the conductive layer 54 as shown in FIG. 15 (hereinafter, referred to as a second embodiment).

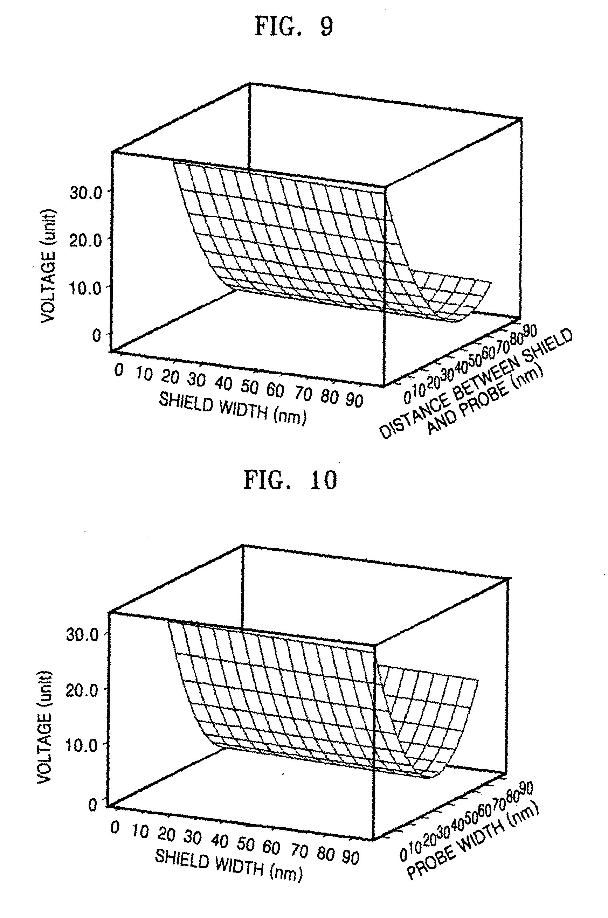

FIG. 9 is a three-dimensional graph illustrating a variation of a read voltage according to the widths Xs of the shield layers 50 and 52 and the distances Xd between the core portion 44 and the shield layers 50 and 52 in the first embodiment. FIG. 10 is a three-dimensional view illustrating a variation of a read voltage according to the widths Xs of the shield layers 50 and 52 and the width Xp of the core portion 44 in the first embodiment.

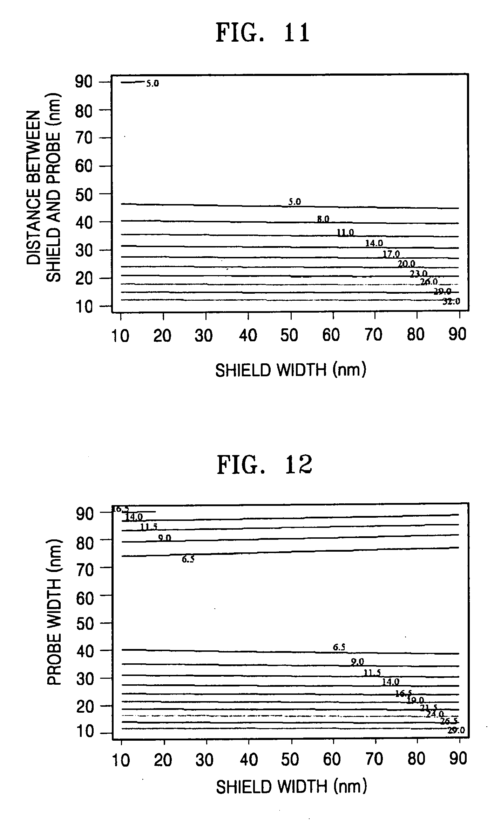

Referring to the FIGS. 9 and 10, the read voltage becomes higher as the width Xp of the core portion 44 is smaller. Also, the read voltage becomes higher as the distance between the shield layers 50 and 52 and the core portion 44 is smaller. However, the variation of the read voltage is independent on the variation of the widths Xs of the shield layers 50 and 52. These are supported by FIGS. 11 and 12. FIG. 11 is a graph illustrating a variation of an equipotential line for a read voltage using the widths Xs of the shield layers 50 and 52 and the distance Xd between the shield layers 50 and 52 and the core portion 44 as parameters. FIG. 12 is a graph illustrating a variation of an equipotential line for a read voltage using the width Xs of the shield layers 50 and 52 and the width Xp of the core portion 44 as parameters. Referring to FIGS. 11 and 12, the equipotential line for a read voltage varies when the distance Xd between the shield layers 50 and 52 and the core portion 44 and the width Xp of the core portion 44 change. On the other hand, the equipotential line for a read voltage does not vary when the widths Xs of the shield layers 50 and 52 change. Accordingly, the read voltage does not vary although the widths Xs of the shield layers 50 and 52 are varied.

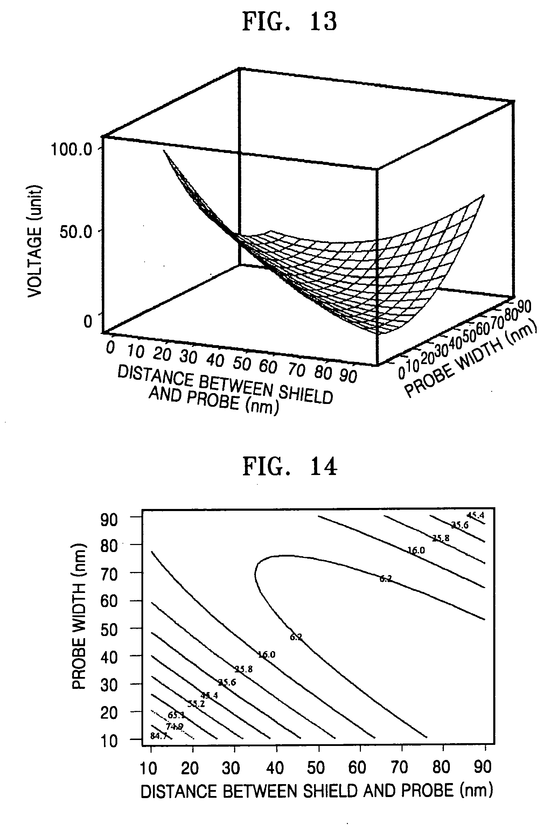

FIG. 13 is a three-dimensional view illustrating a variation of a read voltage according to the distance Xd between the shield layers 50 and 52 and the width Xp of the core portion in the first embodiment. Referring to FIG. 13, the read voltage becomes higher as the width Xp of the core portion 44 becomes narrower and the distance Xd between the shield layers 50 and 52 and the core portion 44 becomes smaller. This can be inferred from FIGS. 9 and 10.

FIG. 14 is illustrates the result in FIG. 13 using a variation of an equipotential line for a read voltage.

Referring to FIG. 14, the read voltage in the equipotential line increases as the width Xp of the core portion 44 and the distance Xd between the shield layers 50 and 52 and the core portion 44 are smaller.

In FIGS. 11, 12 and 14, the numbers written on each equipotential line represent the read voltage of the corresponding equipotential line for a read voltage.

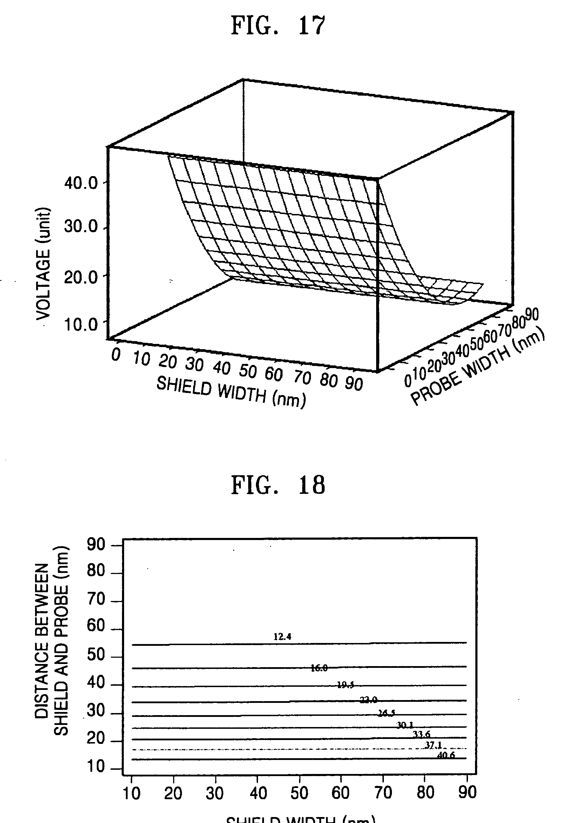

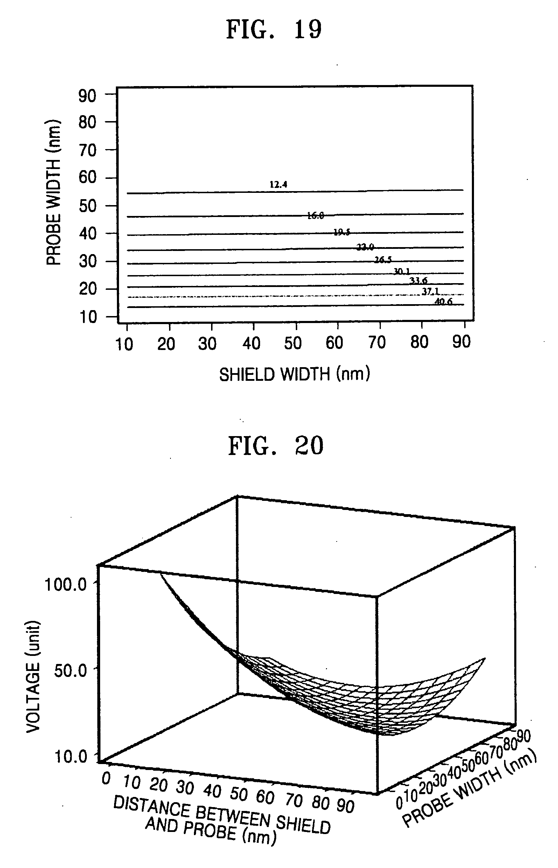

FIGS. 16 through 21 are graphs illustrating variations of the read voltage and the equipotential line for a read voltage according to a variation of the widths Xs of the shield layers 50 and 52 and at least one of the distance Xd between the shield layers 50 and 52 and the core portion 44 and the width Xp of the core portion 44 in the second embodiment. FIGS. 16 through 21 are similar with FIGS. 9 through 14 except that fact that the read voltage increases slightly. Accordingly, the detailed descriptions of FIGS. 16 through 21 will be omitted.

When the first and second shield layers 50 and 52 are not provided, that is, when only the core portion 44 is provided, the variation of the read voltage and the equipotential line for a read voltage are identical to those in the FIGS. 2 and 3.

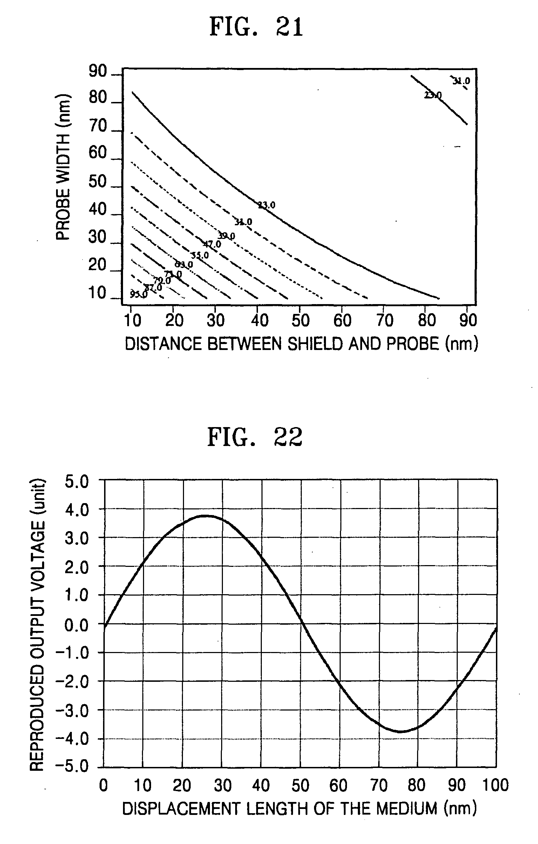

FIGS. 22 through 24 are graphs illustrating an output of a read voltage when a recording medium moves about 100 nm in a case where the width Xs of the shield layers 50 and 52 is 50 nm, the distance Xd between the shield layers 50 and 52 and the core portion 44 is 10 nm, and the width Xp of the core portion 44 is 50nm.

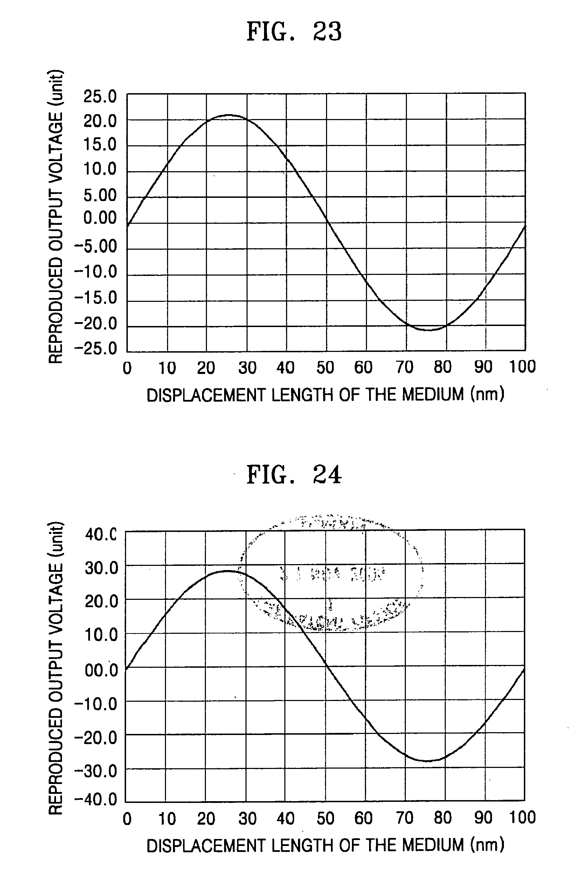

FIG. 22 is a graph of the first embodiment with no the shield layers 50 and 52. FIGS. 23 and 24 are graphs of the second embodiment with the first and second shield layers 50 and 52.

Referring to FIG. 22, when the shield layers 50 and 52 are not provided, the read voltage does not reach 8V slightly. Referring to FIG. 23, the read voltage exceeds 40V slightly in the first embodiment. Referring to FIG. 24, the read voltage exceeds 55V slightly and does not reach 60V in the second embodiment.

As mentioned above, in the electrical read head of the present invention, the surface facing the recording medium has a plane structure instead of a sharp structure. Accordingly, as the width of the core portion actually used to record/read data is thinner and the distance between the core portion and the shield layer is smaller, the read voltage increases more. This leads to the increase of both the resolution power and the sensitivity of the electrical read head. Accordingly, the present invention can increase the track density of the recording medium, that is, Track-Per-Inch (TPI), and signal-to-noise ratio.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An electrical read head including a core portion for recording/reading data on/from a recording medium and an electrode pad for connecting the core portion to a power supply, wherein a surface of the core portion for facing the recording medium is a plane surface and side surfaces of the core portion are perpendicular to the plane surface.

2. The electrical read head as claimed in claim 1, further comprising:
an insulating layer covering both sides of the core portion and the electrode pad; and
a shield layer covering a side surface of the insulating layer.

3. The electrical read head as claimed in claim 1 or 2, wherein the core portion includes a nonconductive region and a conductive region.

4. The electrical read head as claimed in any preceding claim, wherein the core portion is a pure semiconductor layer.

5. The electrical read head as claimed in claim 3, wherein the conductive region is a region doped with conductive impurities.

6. A method of operating a read head including a core portion, an electrode pad connecting the core portion to a power supply, an insulating layer covering both side surfaces of the core portion and the electrode pad, and a shield layer covering a side surface of the insulating layer, the method comprising:
grounding the shield layer when reading data from a recording medium having a conductive layer attached to a bottom thereof using the read head.

7. The method as claimed in claim 6, wherein the conductive layer is grounded.

8. The method as claimed in claim 6 or 7, wherein a surface of a core portion facing the recording medium is a plane surface and side surfaces of the core portion are perpendicular to the plane surface.

9. The method as claimed in any of claims 6 to 8, wherein the core portion includes a nonconductive region and a conductive region.
